# EUROPÄISCHE PATENTSCHRIFT

(11) **EP 1 980 791 B1**
(45) Veröffentlichungstag und Bekanntmachung des Hinweises auf die Patenterteilung: **09.11.2016**
(21) Anmeldenummer: 08104672.4
(22) Anmeldetag: 14.07.2004
(51) Int. Cl.: F24C 7/08, A21B 1/40, A47J 37/08, G01N 21/25, F24C 15/16

(54) **Gargerät mit einer Bräunungssensorvorrichtung**
Cooking device with browning sensor
Appareil de cuisson avec capteur de brunissement

(30) Priorität: 06.08.2003 DE 10336114
(43) Veröffentlichungstag der Anmeldung: 15.10.2008
(62) Teilanmeldung aus: 04016561.5
(73) Patentinhaber: BSH Hausgeräte GmbH, 81739 München (DE)
(72) Erfinder: Klemp, Eric, 83301, Traunreut (DE); Schnell, Wolfgang, 83308, Trostberg (DE); Zeraschi, Monika, 83301, Traunreut (DE)

(56) Entgegenhaltungen:
- EP-A- 0 271 899
- EP-A- 0 682 243
- EP-A- 0 792 088
- WO-A-2005/066547
- WO-A1-03/011090
- DE-A1- 19 706 119
- DE-U1- 8 905 998
- DE-U1- 20 105 178
- US-B1- 6 543 337

## Beschreibung

Die Erfindung geht aus von einem Gargerät mit einer Bräunungssensorvorrichtung nach dem Oberbegriff des Anspruchs 1.

Aus der EP 0 682 243 A1 ist ein gattungsbildendes Gargerät mit einer Bräunungssensorvorrichtung bekannt. Das Gargerät weist eine Steuereinheit auf, über die eine Abschaltung erfolgen kann, sobald ein vorbestimmter Bräunungsgrad für ein bestimmtes Gargut erreicht wird.

DE 197 06 119 A1 offenbart ein elektrisches Haushaltsgerät, insbesondere einen Brotröster, zum Bearbeiten eines Nahrungsmittels mittels Wärmeenergie mit mindestens einem Heizelement zur Abgabe der Wärmeenergie an das Nahrungsmittel, mit einem Einstellelement zum Vorgeben einer Bearbeitungsgesamtdauer, während die Wärmeenergie an das Nahrungsmittel abgegeben wird, und damit eines Bearbeitungsendergebnisses, und mit einer Steuervorrichtung zur Steuerung einer Anzeigevorrichtung. Um den Bedienkomfort des Haushaltsgerätes zu verbessern, ist mindestens ein Sensor zur fortlaufenden Erfassung eines Bearbeitungsergebnisses im Haushaltsgerät angeordnet, wobei der Sensor mit der Steuervorrichtung in Verbindung steht, die das Bearbeitungsergebnis fortlaufend an die Anzeigevorrichtung ausgibt.

US 6,543,337 B1 offenbart Toastgeräte zum Toasten von Lebensmittel, welche automatisch einen Bräunungsgrad der in ihnen gerösteten Lebensmittel steuern. Die Toaster können einen Sensor verwenden, um eine Qualität der gerösteten Lebensmittel zu erfassen.

Ein weiteres Gargerät mit Bräunungssensor wird in der WO/03 011 090 offenbart.

Die Aufgabe der Erfindung besteht insbesondere darin, ein gattungsgemäßes Gargerät mit gesteigertem Bedienkomfort und gesteigerter Flexibilität in der Anwendung der Bräunungssensorvorrichtung bereitzustellen. Die Aufgabe wird erfindungsgemäß durch die Merkmale des unabhängigen Patentanspruchs gelöst, während vorteilhafte Ausgestaltungen und Weiterbildungen der Erfindung den Unteransprüchen entnommen werden können.

Die Erfindung geht aus von einem Gargerät mit einer Bräunungssensorvorrichtung und einer Elektronikeinheit, wobei mittels der Elektronikeinheit wenigstens ein Bräunungsgrad eines Garguts, und zwar ein zuvor in einer Speichereinheit abgespeicherter und/oder insbesondere ein aktuell sensierter Bräunungsgrad einer Ausgabeeinheit zur Ausgabe an einen Bediener zuführbar ist.

Ein vorliegender Bräunungsgrad kann stets aktuell von einem Bediener einfach und schnell für zahlreich unterschiedliche Gargüter abgelesen, die Anwendung des Gargeräts kann vereinfacht, die Bedienfehler können vermieden und der Bedienkomfort kann gesteigert werden. Die Bräunungssensorvorrichtung kann flexibel für zahlreich unterschiedliche Gargüter vorteilhaft eingesetzt werden, wodurch sich die erfindungsgemäße Lösung besonders für Haushaltsgargeräte eignet, mit denen im Allgemeinen zahlreich vollständig unterschiedliche Gargüter zubereitet werden.

Ferner ist gemäß der Erfindung mittels der Elektronikeinheit der sensierte Bräunungsgrad mit einem vorgegebenen, insbesondere gespeicherten, Bräunungsgrad vergleichbar und eine Kenngröße für einen relativen Bräunungsgrad berechenbar. So kann eine manuelle Steuerung und/oder Regelung vereinfacht werden, und zwar insbesondere, wenn die Kenngröße für den relativen Bräunungsgrad der Ausgabeeinheit zur Ausgabe zuführbar ist. Ferner kann die Steuerung und/oder Regelung einfach automatisiert werden. Anstatt mit einem gespeicherten Bräunungsgrad könnte der aktuell sensierte Bräunungsgrad auch mit einem aktuell eingegebenen Bräunungsgrad verglichen werden.

Zudem ist gemäß der Erfindung mittels der Elektronikeinheit abhängig von dem sensierten Bräunungsgrad und einem vorgegebenen Bräunungsgrad eine verbleibende Garzeit berechenbar, wodurch der Bedienkomfort weiter gesteigert und ein Beitrag zur flexiblen Anwendung der Bräunungssensorvorrichtung für unterschiedliche Gargüter erreicht werden kann, und zwar insbesondere, wenn die verbleibende Garzeit einer Ausgabeeinheit zur Ausgabe zuführbar ist.

Unter Elektronikeinheit soll in diesem Zusammenhang insbesondere eine Recheneinheit, eine Steuereinheit und /oder eine Regeleinheit verstanden werden.

Der Begriff "Bräunungsgrad" wird nachfolgend allgemein derart verstanden, dass hierunter eine Veränderung der Oberflächenfärbung erfasst wird, die sich von anfangs ganz hell bis später zu dunkleren Werten hin verändert. Eine weiße Fläche würde dabei einen Bräunungsgrad von 0 und eine schwarze Fläche würde dabei einen Bräunungsgrad von 1 aufweisen.

Unter Bräunungssensorvorrichtung soll in diesem Zusammenhang eine Vorrichtung verstanden werden, mittels der ein für die Bräunung des Garguts repräsentativer Wert ermittelt werden kann, und zwar insbesondere eine Vorrichtung zur Messung des Bräunungsgrads eines Garguts, insbesondere zur Messung des Bräunungsgrads eines Backguts, bei einer Wärmebehandlung in einem Garraum, mit mindestens einer Strahlungsquelle, die eine Messstrahlung und eine Referenzstrahlung unterschiedlicher Wellenlängenbereiche erzeugt, die beide über eine von einem Hohlspiegel gebildete Koppeleinheit auf das Gargut abgestrahlt werden, mit einem Messsensor zur Erfassung der vom Gargut reflektierten, rückgestreuten Strahlung, mit einem Referenzsensor zur Erfassung der Intensität der Messstrahlung und der Referenzstrahlung, und mit einer Einrichtung zur Ermittlung des Bräunungsgrads aus der vom Messsensor detektierten Intensität der Messstrahlung, aus der vom Messsensor detektierten Intensität der Referenzstrahlung, aus der vom Referenzsensor detektierten Intensität der Messstrahlung und aus der vom Referenzsensor detektierten Intensität der Referenzstrahlung, wie diese in der Druckschrift EP 0 682 243 A1 beschrieben ist. Die Druckschrift EP 0 682 243 A1 soll in ihrem gesamten Umfang und insbesondere im Hinblick auf den Aufbau der Bräunungssensorvorrichtung und dem Verfahren zur Ermittlung des Bräunungsgrads als zur Lehre der vorliegenden Erfindung gehörig anzusehen sein.

Unter Gargerät sollen sämtliche Geräte verstanden werden, bei denen der Fachmann eine Anwendung der erfindungsgemäßen Lösung als sinnvoll erachtet, wie insbesondere Backöfen, Mikrowellenherde, Brotröster, Toaster usw. bzw. prinzipiell alle Geräte, die den Zustand des Garguts durch thermische Einwirkung verändern. Ferner soll unter einer Ausgabeeinheit in diesem Zusammenhang insbesondere eine visuelle und/oder eine akustische Ausgabeeinheit verstanden werden, wie Bildschirme, Lautsprecher usw.

In einer weiteren Ausgestaltung der Erfindung wird vorgeschlagen, dass insbesondere von einem Gargerätbediener mittels einer Eingabeeinheit und mittels der Elektronikeinheit ein in einer Speichereinheit gespeicherter, insbesondere auf ein spezielles Gargut bezogener Bräunungsgrad veränderbar ist. Es kann komfortabel ein gewünschter Bräunungsgrad erzielt bzw. kann dieser auf individuelle Wünsche angepasst werden. Ist der gespeicherte, vorgegebene Bräunungsgrad erreicht, jedoch noch nicht der individuell gewünschte Bräunungsgrad, kann einfach nachgeregelt werden. Der gespeicherte Bräunungsgrad kann dabei vorübergehend und/oder dauerhaft und kann vor, während und/oder nach einem Garprozess veränderbar ausgeführt sein. Dabei sind vorteilhaft mehrere Bräunungsgrade für unterschiedliche Gargüter speicherbar, die mittels der Eingabeeinheit entsprechend auswählbar und wenn erforderlich auf vorliegende, besondere Wünsche oder Gegebenheiten anpassbar sind. Mittels der Eingabeeinheit können verschiedene, dem Fachmann als sinnvoll erscheinende Eingabeformen realisiert sein, beispielsweise kann eine Eingabe über Sprache, über eine Tastatur, über eine Schaltwippe, über einen Berührschalter, wie über einen Touchscreen, und/oder über eine Leseeinheit, mittels der beispielsweise Codes von speziellen Chipkarten und/oder Verpackungen von Fertigmenüs eingelesen werden können, usw. realisiert sein. Zudem könnte das Gargerät mit einer Datenschnittstelle zum Datenaustausch verbunden sein, beispielsweise mit einer Mobilfunkschnittstelle, einer hausinternen Schnittstelle und/oder einer Internetschnittstelle usw.

Neben einer wichtigen Information für den Bediener können auch abhängig von der verbleibenden Garzeit verschiedene Steuerabläufe und/oder Regelabläufe aktiviert werden, beispielsweise können abhängig von der verbleibenden Garzeit verschiedene Heizelemente zu-, abgeschaltet und/oder in ihrer Leistungsaufnahme verändert Werden. Die verbleibende Garzeit wird dabei vorteilhaft mit empirisch ermittelten Werten, abhängig von verschiedenen, dem Fachmann als sinnvoll erscheinenden Betriebsparametern bestimmt, wie abhängig vom Gargut, gewählter Temperatur und/oder gewählter Garart usw.

Ferner wird vorgeschlagen, dass das Gargerät eine Sensoreinheit aufweist, mittels der eine Kenngröße für eine Einschubhöhe eines Garguts sensierbar ist. Die sensierte Einschubhöhe kann vorteilhaft bei weiteren Steuerungs-, Regelungs- und/oder Rechenvorgängen berücksichtigt werden, wie insbesondere bei der Berechnung bzw. bei der Bestimmung einer verbleibenden Garzeit, ausgehend von einem Ist-Bräunungszustand bis zu einem Soll-Bräünungszustand. Der Bedienkomfort kann weiter gesteigert werden, und zwar insbesondere, wenn die sensierte Einschubhöhe der Ausgabeeinheit zur Ausgabe zuführbar ist. Ferner können Fehlbedienungen frühzeitig erkannt und in einer weiteren Steuerung und/oder Regelung berücksichtigt und kompensiert werden, und zwar insbesondere, wenn über die Elektronikeinheit die sensierte Kenngröße für die Einschubhöhe mit einer vorgegebenen Kenngröße vergleichbar ist.

Ist die Sensoreinheit zur Sensierung der Einschubhöhe zumindest teilweise einstückig mit der Bräunungssensorvorrichtung ausgeführt, können zusätzliche Bauteile, Montageaufwand und Kosten eingespart werden.

In einer weiteren Ausgestaltung der Erfindung wird vorgeschlagen, dass mittels einer Eingabeeinheit und mittels der Elektronikeinheit wenigstens ein in einer Speichereinheit abgelegter Datensatz mit einem vorgegebenen Bräunungsgrad über zumindest zwei Gliederungsebenen abrufbar ist. Es können zahlreiche unterschiedliche Datensätze von einem Bediener übersichtlich abgerufen und der Bedienkomfort kann weiter gesteigert werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Backofen von vorn und
- Fig. 2: eine schematisierte Darstellung des Backofens aus Fig. 1.

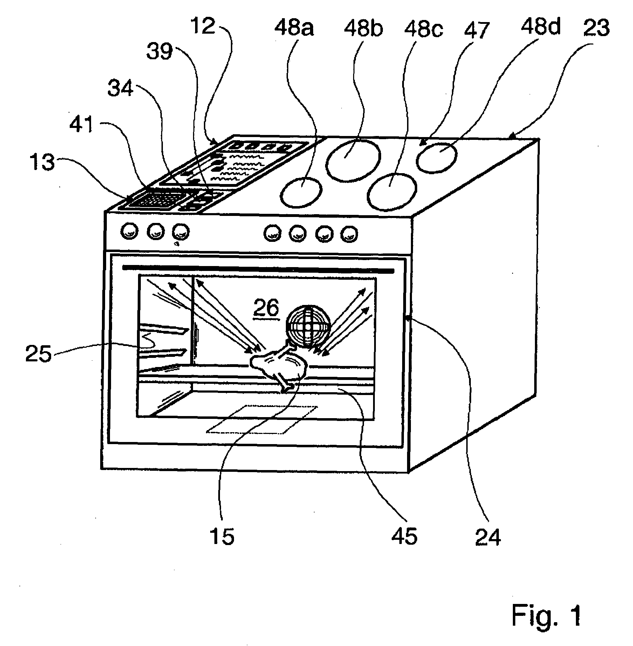

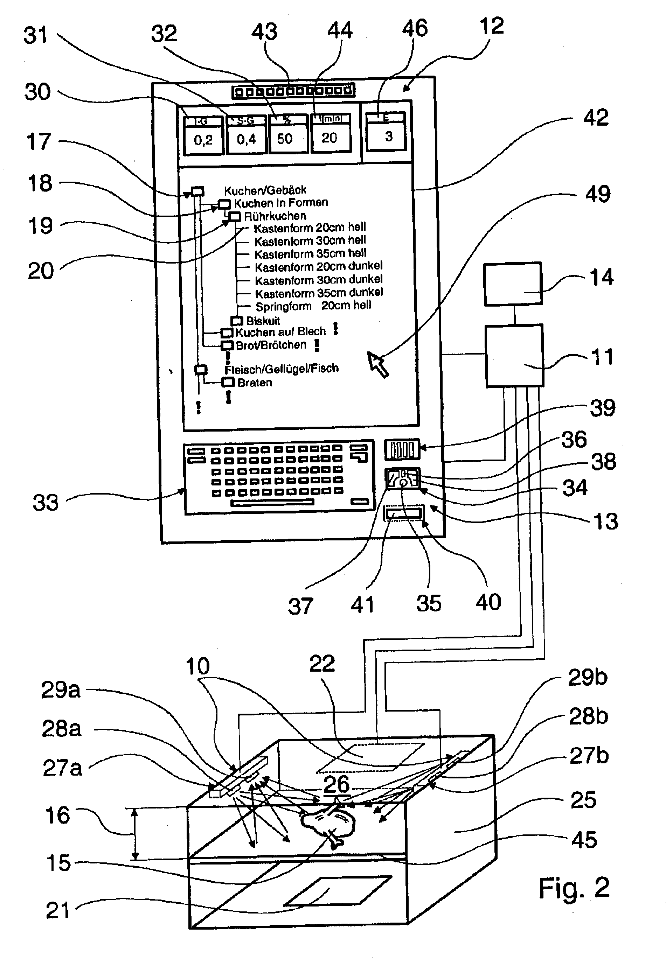

Fig. 1 zeigt einen Haushaltsbackofen von vorn mit einem in einem Backofengehäuse 23 angeordneten und von einer Backofentür 24 und einer Muffel 25 begrenzten Garraum 26. An einer Deckseite des Haushaltsbackofens ist eine Kochmulde 47 mit vier Kochstellen 48a, 48b, 48c, 48d und seitlich neben der Kochmulde 47 sind eine Eingabeeinheit 13 und eine Ausgabeeinheit 12 angeordnet. Grundsätzlich könnte die Eingabeeinheit 13 und die Ausgabeeinheit 12 auch an einer Frontseite des Haushaltsbackofens angeordnet sein. Die Eingabeeinheit 13 weist eine Tastatur 33, eine Bildschirmzeigersteuervorrichtung 34 mit einer drehbar gelagerten Kugel 35, einem drehbar gelagerten Stellrad 36 und zwei Tasten 37, 38, ein Mikrofon 39 zur Spracheingabe und eine Chipkartenleseeinheit 40 mit einem Aufnahmeschlitz 41 auf (Fig. 2). Die Ausgabeeinheit 12 umfasst einen Bildschirm 42 zur visuellen Ausgabe und einen Lautsprecher 43 zur akustischen Ausgabe von Informationen, wie insbesondere zur Ausgabe von akus-tischen Warnsignalen und zur sprachunterstützten Menüführung.

Der Haushaltsbackofen umfasst zudem eine Bräunungssensorvorrichtung 10, die zwei Einheiten 27a, 27b mit jeweils einer Sendereinheit 28a, 28b und einer Empfängereinheit 29a, 29b aufweist. Die Einheiten 27a, 27b sind in seitlich oberen Eckbereichen des Garraums 26 angeordnet. Im Hinblick auf eine genauere Beschreibung der Bräunungssensorvorrichtung 10 darf auf die Druckschrift EP 0 682 243 A1 verwiesen werden. Ferner umfasst der Haushaltsbackofen eine Elektronikeinheit 11 und eine Speichereinheit 14.

Mittels der Eingabeeinheit 13 und mittels der Elektronikeinheit 11 sind Datensätze für spezielle Gargüter über vier Gliederungsebenen 17, 18, 19, 20 abrufbar. In der ersten Gliederungsebene 17 sind beispielsweise die Hauptgruppen "Kuchen/Gebäck", "Fleisch, Geflügel, Fisch" usw. aufgeführt. In der zweiten Gliederungsebene 18 ist die Hauptgruppe "Kuchen/Gebäck" beispielsweise weiter unterteilt in die ersten Untergruppen "Kuchen in Formen", "Kuchen auf Blech", "Brot/Brötchen" usw. In der dritten Gliederungsebene 19 ist die erste Untergruppe "Kuchen in Formen" weiter in zweite Untergruppen "Rührkuchen", "Streuselkuchen" usw. unterteilt. Die zweite Untergruppe "Rührkuchen" ist dann im Hinblick auf eine Formgröße und einen gewünschten, qualitativ mit "dunkel", "hell" angegebenen Bräunungsgrad in dritte Untergruppen unterteilt.

Durch Anfahren einer der Hauptgruppen, einer der ersten Untergruppe oder einer der zweiten Untergruppe mit einem Bildschirmzeiger 49 mittels der Bildschirmzeigersteuervorrichtung 34 und durch anschließendes Doppelklicken auf die der Tastatur 33 zugewandten Taste 37 kann jeweils in die nächst tiefere Gliederungsebene 18, 19, 20 gesprungen werden.
Wird eine dritte Untergruppe mittels der Bildschirmzeigersteuervorrichtung 34 angefahren und durch Doppelklicken auf die Taste 37 ausgewählt, werden für das dadurch ausgewählte Gargut relevante Informationen auf dem Bildschirm 42 angezeigt, wie beispielsweise Zubereitungsanweisungen, voraussichtliche Garzeit, quantitativer Bräunungsgrad zwischen 0 und 1, eine empfohlene Garart und/oder eine empfohlene Einschubhöhe usw.

Ferner wird einem Bediener zur Auswahl gestellt" ob ein Garprogramm für das ausgewählte Gargut 15 gestartet werden soll, gemäß dem abhängig von im Datensatz hinterlegten Daten vollautomatisiert von Heizmitteln gebildete Verbrauchermittel 21, 22 angesteuert werden, oder ob die Verbrauchermittel 21, 22 in einem nachfolgenden Garprozess manuell angesteuert werden sollen.

Wird das Garprogramm gestartet, wird mittels der Elektronikeinheit 11, die zudem eine Steuer- und Regeleinheit der Verbrauchermittel 21, 22 umfasst, ein sensierter Bräunungsgrad des Garguts 15 der Ausgabeeinheit 12 zur Ausgabe an den Bediener des Haushaltsbackofens zugeführt. Der sensierte Bräunungsgrad wird im Betrieb über ein erstes Anzeigefeld 30 ausgegeben, wobei eine weiße Fläche einen Bräunungsgrad von 0 und eine schwarze Fläche einen Bräunungsgrad von 1 aufweisen würde. Ferner ist mittels der Elektronikeinheit 11, die eine Recheneinheit umfasst, der sensierte Bräunungsgrad mit dem in der Speichereinheit 14 für das spezielle Gargut 15 vorgegebenen und in einem zweiten Anzeigefeld 31 ausgegebenen Bräunungsgrad vergleichbar und eine Kenngröße für einen relativen Bräunungsgrad berechenbar, die in einem dritten Anzeigefeld 32 ausgegeben wird. Anstatt dass der sensierte Bräunungsgrad mit dem in der Speichereinheit 14 bereits seit längerer Zeit für das spezielle Gargut 15 gespeicherten Bräunungsgrad verglichen wird, kann der sensierte Bräunungsgrad auch mit einem aktuell vom Bediener eingegebenen Bräunungsgrad verglichen werden.

Weiter ist mittels der Elektronikeinheit 11 abhängig von dem sensierten Bräunungsgrad und dem vorgegebenen Bräunungsgrad eine verbleibende Garzeit in Minuten berechenbar, die mittels der Elektronikeinheit 11 der Ausgabeeinheit 12 zur visuellen Ausgabe an den Bediener zuführbar ist und im Betrieb in einem vierten Anzeigefeld 44 zur Anzeige gebracht wird. Bei der Berechnung bzw. bei der Bestimmung der Garzeit werden empirisch ermittelte und in der Speichereinheit 14 abgelegte Daten genutzt. Dabei werden insbesondere eine gewählte Garart, d.h. Oberhitze, Unterhitze, Umluft, Grillbetrieb, eine vorliegende Temperatur sowie eine vorliegende Einschubhöhe 16 berücksichtigt.

Eine Kenngröße für die vorliegende Einschubhöhe 16 wird dabei mittels einer mit der Bräunungssensorvorrichtung 10 einstückig ausgeführten Sensoreinheit sensiert. Dabei werden von den Sendereinheiten 28a, 28b auf ein Backblech 45 bzw. auf einen Backrost gesendete und an die Empfängereinheiten 29a, 29b reflektierte Strahlungen zuerst als am Backblech 45 reflektierte Strahlen identifiziert und anschließend daraufhin ausgewertet, in welcher Entfernung das Backblech 45 angeordnet ist, um anschließend auf die vorliegende Einschubhöhe 16 schließen zu können. Die vorliegende Entfernung kann beispielsweise über eine Laufzeitermittlung oder über sonst eine dem Fachmann als sinnvoll erscheinende Auswertung erfolgen. Die Identifizierung der am Backblech 45 reflektierten Strahlung kann beispielsweise anhand einer bestimmten Intensität der Strahlung festgemacht werden. Das Backblech 45 weist stets eine zumindest im Wesentlichen gleichbleibende Farbe und somit auch einen gleichbleibenden "Bräunungsgrad" auf.

Die sensierte Einschubhöhe 16 wird mittels der Elektronikeinheit 11 mit einer vorgegebenen, in der Speichereinheit 14 gespeicherten Einschubhöhe verglichen. Weicht die sensierte Einschubhöhe 16 von der gespeicherten Einschubhöhe ab, liegt jedoch in einem akzeptablen Bereich, wird eine Differenz zwischen der sensierten, tatsächlich vorliegenden Einschubhöhe 16 und der gespeicherten Einschubhöhe durch entsprechendes Ansteuern der Verbrauchermittel 21, 22 ausgeglichen. Liegt die sensierte Einschubhöhe 16 in einem inakzeptablen Bereich, wird dies dem Bediener durch ein Warnsignal über den Lautsprecher 43 und über den Bildschirm 42 mitgeteilt. Die sensierte Einschubhöhe 16 wird dem Bediener durch Angabe einer Einschubebene in einem fünften Anzeigefeld 46 mitgeteilt.

Entspricht der sensierte Bräunungsgrad dem vorgegebenen Bräunungsgrad, wird abhängig von einem Einstellzustand des Haushaltsbackofens entweder ein akustisches Signal über den Lautsprecher 43 und ein visuelles Signal über den Bildschirm 42 ausgegeben, der Garprozess automatisch unterbrochen und/oder die Backofentür 24 geöffnet. Ferner sind auch weitere, zumindest teilautomatisierte Vorgänge denkbar, die bei Erreichen des vorgegebenen Bräunungsgrads ausgelöst werden.

Der in der Speichereinheit 14 abgespeicherte Bräunungsgrad kann vom Bediener mittels der Eingabeeinheit 13 und mittels der Elektronikeinheit 11 verändert werden, beispielsweise, wenn bei Erreichen eines vorgegebenen Bräunungsgrads das Gargut 15 nicht die individuell gewünschte Bräune aufweist und die Garzeit für ein entsprechendes Gargut 15 grundsätzlich länger bemessen werden soll.

Ferner können mittels der Eingabeeinheit 13 und mittels der Elektronikeinheit 11 Datensätze in die Speichereinheit 14 einer oder mehrerer Gliederungsebenen 17, 18, 19, 20 zugeordnet eingegeben werden, wobei den Datensätzen frei wählbare Namen zugeordnet werden können. Die Datensätze können durch den Bediener auf unterschiedliche Weise in die Speichereinheit 14 abrufbar eingegeben werden, und zwar können diese über einen Lernmodus aufgenommen werden, indem ein durchgeführter, manuell gesteuerter Garprozess gespeichert wird, oder die Datensätze können über die Tastatur 33, sprachgesteuert über das Mikrofon und/oder über die Chipkartenleseeinheit 40, indem in den Aufnahmeschlitz 41 der Chipkartenleseeinheit 40 entsprechende Chipkarten eingesteckt werden, eingegeben werden.

**Bezugszeichen**

| | | | |
|---|---|---|---|
| 10 | Bräunungssensorvorrichtung | 37 | Taste |
| 11 | Elektronikeinheit | 38 | Taste |
| 12 | Ausgabeeinheit | 39 | Mikrofon |
| 13 | Eingabeeinheit | 40 | Chipkartenleseeinheit |
| 14 | Speichereinheit | 41 | Aufnahmeschlitz |
| 15 | Gargut | 42 | Bildschirm |
| 16 | Einschubhöhe | 43 | Lautsprecher |
| 17 | Gliederungsebene | 44 | Anzeigefeld |
| 18 | Gliederungsebene | 45 | Backblech |
| 19 | Gliederungsebene | 46 | Anzeigefeld |
| 20 | Gliederungsebene | 47 | Kochmulde |
| 21 | Verbrauchermittel | 48 | Kochstelle |
| 22 | Verbrauchermittel | 49 | Bildschirmzeiger |
| 23 | Backofengehäuse | | |
| 24 | Backofentür | | |
| 25 | Muffel | | |
| 26 | Garraum | | |
| 27 | Einheit | | |
| 28 | Sendereinheit | | |
| 29 | Empfängereinheit | | |
| 30 | Anzeigefeld | | |
| 31 | Anzeigefeld | | |
| 32 | Anzeigefeld | | |
| 33 | Tastatur | | |
| 34 | Bildschirmzeigersteuervorrichtung | | |
| 35 | Kugel | | |
| 36 | Stellrad | | |

## Patentansprüche

1. Gargerät mit einer Bräunungssensorvorrichtung (10) und einer Elektronikeinheit (11), wobei mittels der Elektronikeinheit (11) wenigstens ein Bräunungsgrad eines Garguts (15) einer Ausgabeeinheit (12) zur Ausgabe an einen Bediener zuführbar ist, **dadurch gekennzeichnet, dass** mittels der Elektronikeinheit (11) ein sensierter Bräunungsgrad mit einem vorgegebenen Bräunungsgrad vergleichbar und eine Kenngröße für einen relativen Bräunungsgrad berechenbar ist und dass mittels der Elektronikeinheit (11) abhängig von dem sensierten Bräunungsgrad und einem vorgegebenen Bräunungsgrad eine verbleibende Garzeit berechenbar ist.

2. Gargerät nach Anspruch 1, **dadurch gekennzeichnet, dass** mittels einer Eingabeeinheit (13) und mittels der Elektronikeinheit (11) ein in einer Speichereinheit (14) gespeicherter Bräunungsgrad veränderbar ist.

3. Gargerät nach einem der vorhergehenden Ansprüche, **dadurch gekennzeichnet, dass** mittels der Elektronikeinheit (11) die Kenngröße für den relativen Bräunungsgrad der Ausgabeeinheit (12) zur Ausgabe zuführbar ist.

4. Gargerät nach einem der vorhergehenden Ansprüche, **dadurch gekennzeichnet, dass** mittels der Elektronikeinheit (11) die verbleibende Garzeit der Ausgabeeinheit (12) zur Ausgabe zuführbar ist.

5. Gargerät nach einem der vorhergehenden Ansprüche, **dadurch gekennzeichnet, dass** abhängig von der verbleibenden Garzeit verschiedene Steuerabläufe und/oder Regelabläufe aktivierbar sind.

6. Gargerät nach einem der vorhergehenden Ansprüche, **dadurch gekennzeichnet, dass** mittels einer Eingabeeinheit (13) und mittels der Elektronikeinheit (11) wenigstens ein in einer Speichereinheit (14) abgelegter Datensatz mit einem vorgegebenen Bräunungsgrad über zumindest zwei Gliederungsebenen (17, 18, 19, 20) abrufbar ist.

7. Gargerät nach einem der vorhergehenden Ansprüche, **gekennzeichnet durch** die Ausbildung als Haushaltsgerät.

8. Gargerät nach einem der vorhergehenden Ansprüche, **gekennzeichnet durch** eine Sensoreinheit, mittels der eine Kenngröße für eine Einschubhöhe (16) des Garguts (15) sensierbar ist.

9. Gargerät nach Anspruch 8, **dadurch gekennzeichnet, dass** über die Elektronikeinheit (11) die sensierte Kenngröße für die Einschubhöhe (16) mit einer vorgegebenen Kenngröße vergleichbar ist.

10. Gargerät nach einem der Ansprüche 8 oder 9, **dadurch gekennzeichnet, dass** die Sensoreinheit zumindest teilweise einstückig mit der Bräunungssensorvorrichtung (10) ausgeführt ist.

## Claims

1. Cooking device with a browning sensor (10) and an electronics unit (11), wherein by means of the electronics unit (11) at least one degree of browning of a food (15) can be supplied to an output unit (12) for output to an operator, **characterised in that** by means of the electronics unit (11) a sensed degree of browning can be compared with a predetermined degree of browning and a parameter can be calculated for a relative degree of browning and that a remaining cooking time can be calculated by means of the electronics unit (11) as a function of the sensed degree of browning and a predetermined degree of browning.

2. Cooking device according to claim 1, **characterised in that** a degree of browning stored in a storage unit (14) can be changed by means of an input unit (13) and by means of the electronics unit (11).

3. Cooking device according to one of the preceding claims, **characterised in that** by means of the electronics unit (11) the parameter for the relative degree of browning can be supplied to the output unit (12) for output purposes.

4. Cooking device according to one of the preceding claims, **characterised in that** by means of the electronics unit (11) the remaining cooking time can be supplied to the output unit (12) for output purposes.

5. Cooking device according to one of the preceding claims, **characterised in that** various control sequences and/or processes can be activated as a function of the remaining cooking time.

6. Cooking device according to one of the preceding claims, **characterised in that** by means of an input unit (13) and by means of the electronics unit (11) at least one data record stored in a storage unit (14) with a predetermined degree of browning can be retrieved by way of at least two category levels (17, 18, 19, 20).

7. Cooking device according to one of the preceding claims, **characterised by** the embodiment as a household appliance.

8. Cooking device according to one of the preceding claims, **characterised by** a sensor unit, by means of which a parameter can be sensed for an insertion level (16) of the food (15).

9. Cooking device according to claim 8, **characterised in that** the sensed parameter for the insertion level (16) can be compared with a predetermined parameter by way of the electronics unit (11.

10. Cooking device according to one of claims 8 or 9, **characterised in that** the sensor unit is embodied at least partially in one piece with the browning sensor apparatus (10).

## Revendications

1. Appareil de cuisson avec un dispositif de détection de brunissement (10) et une unité électronique (11), dans lequel, au moyen de l'unité électronique (11), au moins un degré de brunissement d'un produit à cuire (15) peut être envoyé à une unité de sortie (12) pour le fournir à un utilisateur, **caractérisé en ce que**, au moyen de l'unité électronique (11), un degré de brunissement détecté peut être comparé à un degré de brunissement prédéterminé et une grandeur caractéristique pour un degré de brunissement relatif peut être calculée, et **en ce que**, au moyen de l'unité électronique (11), en fonction du degré de brunissement détecté et d'un degré de brunissement prédéterminé, un temps de cuisson restant peut être calculé.

2. Appareil de cuisson selon la revendication 1, **caractérisé en ce que**, au moyen d'une unité d'entrée (13) et au moyen de l'unité électronique (11), un degré de brunissement stocké dans une unité de mémoire (14) peut être modifié.

3. Appareil de cuisson selon l'une des revendications précédentes, **caractérisé en ce que**, au moyen de l'unité électronique (11), la grandeur caractéristique pour le degré de brunissement relatif peut être envoyée à l'unité de sortie (12) pour être fournie en sortie.

4. Appareil de cuisson selon l'une des revendications précédentes, **caractérisé en ce que**, au moyen de l'unité électronique (11), le temps de cuisson restant peut être envoyé à l'unité de sortie (12) pour être fourni en sortie.

5. Appareil de cuisson selon l'une des revendications précédentes, **caractérisé en ce que**, en fonction du temps de cuisson restant, différents processus de commande et/ou processus de réglage peuvent être activés.

6. Appareil de cuisson selon l'une des revendications précédentes, **caractérisé en ce que**, au moyen d'une unité d'entrée (13) et au moyen de l'unité électronique (11), au moins un jeu de données déposé dans une unité de mémoire (14) avec un degré de brunissement prédéterminé peut être appelé par l'intermédiaire d'au moins deux niveaux hiérarchiques (17, 18, 19, 20).

7. Appareil de cuisson selon l'une des revendications précédentes, **caractérisé en ce qu'**il se présente sous la forme d'un appareil ménager.

8. Appareil de cuisson selon l'une des revendications précédentes, **caractérisé par** une unité de détection au moyen de laquelle une grandeur caractéristique pour une hauteur d'introduction (16) du produit à cuire (15) peut être détectée.

9. Appareil de cuisson selon la revendication 8, **caractérisé en ce que**, par l'intermédiaire de l'unité électronique (11), la grandeur caractéristique détectée pour la hauteur d'introduction (16) peut être comparée à une grandeur caractéristique prédéterminée.

10. Appareil de cuisson selon l'une des revendications 8 ou 9, **caractérisé en ce que** l'unité de détection est réalisée, au moins en partie, d'une seule pièce avec le dispositif de détection de brunissement (10).
